# FASCICULE DE BREVET EUROPEEN

(11) **EP 1 870 602 B1**
(45) Date de publication et mention de la délivrance du brevet: **14.04.2010**
(21) Numéro de dépôt: 07290775.1
(22) Date de dépôt: 21.06.2007
(51) Int. Cl.: F16B 21/02, B60R 13/08, F16B 5/06

(54) **Pièce d'assemblage de deux éléments entre eux, dispositif d'assemblage associé et application au domaine de l'automobile**
Montageteil zur Verbindung von zwei Elementen miteinander, entsprechende Montagevorrichtung und Anwendung im Automobilbereich
Piece for assembling two elements, associated assembly device and application to the field of automobiles

(30) Priorité: 22.06.2006 FR 0652607
(43) Date de publication de la demande: 26.12.2007
(73) Titulaire: Peugeot Citroën Automobiles S.A., 78140 Vélizy Villacoublay (FR); Fabi Automobile, 25500 Morteau (FR)
(72) Inventeur: Aubert, Pascal, 78140 Velizy Villacoublay (FR); Pages, Morgan, 25500 Morteau (FR)
(74) Mandataire: Thinat, Michel

(56) Documents cités:
- US-A- 3 956 803
- US-B1- 6 237 970
- US-B1- 6 267 543

## Description

L'invention concerne principalement une pièce d'assemblage d'un premier élément sur un deuxième élément.

L'invention concerne également un dispositif d'assemblage comprenant une telle pièce.

L'invention trouve notamment application pour assurer l'assemblage d'un écran de type cache style au moteur d'un véhicule automobile.

Le moteur d'un véhicule automobile génère du bruit et des vibrations qui peuvent être amortis par la présence d'un écran de type cache style fixé sur le moteur.

La publication FR 2 857 065 décrit un dispositif d'accouplement par emboîtement permettant de relier un écran de type cache style à un moteur.

Ce dispositif comprend un plot relié au cache style dans lequel s'engage un pion solidaire du bloc moteur.

Un tel dispositif présente l'inconvénient majeur d'utiliser plusieurs pièces de forme et de fabrication complexes qui engendrent la présence de moyens multiples de solidarisation entre le pion, le plot et le bloc moteur.

On connaît de plus du brevet US 6 267 543 un dispositif d'assemblage par boulon bloqué par une clavette pour éviter la perte du boulon avant le montage final. Par ailleurs, il est connu du brevet US 3 956 803 d'assembler des plaques par des moyens de type boutonnière, avec un moyen portant un organe de retenue sur lequel est fixé de façon excentrique un organe de verrouillage.

Enfin, il est connu du brevet US 6 237 970 (correspondant au préambule de la revendication indépendante 1) d'assembler deux plaques par un verrou formant une pièce d'assemblage, cette pièce comportant une tête rotative en appui sur la première plaque et des moyens d'assemblage constitués notamment par des pans inclinés activables par la rotation de la tête, pouvant ainsi passer d'au moins une position de prémontage de la pièce à une position d'assemblage des deux plaques.

La présente invention a pour principal objet de pallier aux inconvénients précités en proposant une pièce d'assemblage de configuration plus simple pour une efficacité au moins égale.

A cet effet, la pièce d'assemblage de l'invention, qui est définie par les caractéristiques techniques de la revendication indépendante 1, est essentiellement **caractérisée en ce qu**'elle comprend des moyens d'appui de contact rotatif sur le premier élément et des moyens d'assemblage du premier élément au deuxième élément qui sont activables par rotation de cette pièce d'assemblage montée sur le premier élément et passage d'au moins une position de prémontage à une position d'assemblage.

Avantageusement, la pièce d'assemblage comporte des premiers moyens de verrouillage sur le premier élément dans la position de prémontage et des seconds moyens deverrouillage sur le premier élément dans la position d'assemblage.

De préférence, la pièce d'assemblage comprend un corps surmonté d'une tête en appui de contact rotatif sur la face supérieure du premier élément lorsque le dit corps est logé au travers d'un orifice de ce premier élément, et elle comprend un bras qui s'étend solidairement depuis le corps de la pièce d'assemblage et qui comporte des moyens de maintien fixe du deuxième élément contre le premier élément dans la position d'assemblage.

En outre, le bras de la pièce d'assemblage peut s'étendre depuis une portion inférieure du corps, de sorte que lorsque le dit corps est logé au travers de l'orifice du premier élément, le bras s'étend sous la face inférieure du premier élément, et en ce que l'extrémité libre du bras comporte au moins une nervure, de préférence deux nervures parallèles, assurant le plaquage du deuxième élément contre le premier élément dans la position d'assemblage.

De façon préférentielle, la face inférieure de la tête d'appui circulaire comporte au moins un bourrelet qui est apte à venir s'indexer dans au moins deux rainures conjuguées réalisées sur la face supérieure de la première pièce pour, respectivement, adopter la position de prémontage et la position d'assemblage, et le corps comporte au moins une patte d'encliquetage déformable en regard axial du bourrelet de la tête circulaire de sorte que dans les positions de prémontage et d'assemblage, la patte d'encliquetage vienne s'encliqueter sous la première pièce, ce dont il résulte que cette première pièce vient en prise entre la patte d'encliquetage et la tête circulaire de la pièce d'assemblage.

Avantageusement, la face inférieure de la tête d'appui circulaire comporte deux bourrelets s'étendant radialement autour du corps en étant diamétralement opposés et la face supérieure du premier élément comporte un paire de rainure pour le prémontage et une paire de rainure pour l'assemblage, ces quatre rainures étant deux à deux diamétralement opposées et espacées chacune d'un angle de 90° de sorte que le passage de la position de prémontage à la position d'assemblage s'effectue par rotation d'un quart de tour de la tête d'appui de la pièce d'assemblage en plan sur le premier élément par rapport au premier plan sensiblement perpendiculaire.

Plus avantageusement, la face supérieure de la tête d'appui comporte une rainure centrale permettant de loger un objet de forme conjugué, par exemple une pièce de monnaie, pour exercer manuellement la force de rotation nécessaire pour passer de la position de prémontage à la position d'assemblage.

L'invention concerne également un dispositif d'assemblage d'un premier élément à un deuxième élément comprenant la pièce d'assemblage définie précédemment et comportant des moyens facilitant l'assemblage du premier élément au deuxième élément par relâchement des efforts exercés par la pièce d'assemblage sur le premier élément pendant une position intermédiaire de relâchement et augmentation des efforts de fixation de la pièce d'assemblage sur le premier élément au passage de la position intermédiaire de relâchement à la position de prémontage ou d'assemblement.

De préférence, le dispositif de l'invention comporte au moins une zone creuse réalisée sur la face supérieure du premier élément en s'étendant autour de l'orifice formé dans cet élément et entre deux rainures adjacentes, et cette zone creuse comporte deux rampes qui remontent chacune jusqu'à proximité de la rainure adjacente, de sorte que le passage de la pièce d'assemblage d'une position intermédiaire de relâchement dans laquelle le bourrelet de la tête d'appui est dans la zone creuse jusqu'à l'une ou l'autre des positions indexées de prémontage et d'assemblage, conduise à un déplacement axial vers le haut de la pièce d'assemblage relativement au premier élément, et ainsi l'exercice d'une force de serrage du deuxième élément sur le premier élément lorsque la pièce d'assemblage atteint la position d'assemblage.

Enfin, l'invention concerne l'application de la pièce d'assemblage et du dispositif d'assemblage définis précédemment, à l'assemblage d'un écran de type cache style à un moteur de véhicule automobile.

L'invention sera mieux comprise, et d'autres buts, caractéristiques, détails et avantages de celle-ci apparaîtront plus clairement au cours de la description explicative qui va suivre et qui est faite en référence aux dessins schématiques annexés illustrant à titre d'exemple la pièce d'assemblage et le dispositif de l'invention et dans lesquels :
- la figure 1 est une vue en perspective de trois-quart de dessus de la pièce d'assemblage de l'invention ;
- la figure 2 est une vue en perspective de la pièce d'assemblage de la figure 1 selon la flèche II ;
- la figure 3 est une vue en perspective d'une partie du premier élément coupée selon la ligne III-III de la figure 4 ;
- la figure 4 est une vue de dessus de l'orifice de montage de la pièce d'assemblage selon la flèche IV de la figure 3 ;
- la figure 5 est une vue en coupe représentant la pièce d'assemblage en cours montage sur le premier élément et dont le bras est engagé dans l'orifice de ce premier élément ;
- la figure 6 est une vue en coupe représentant une étape subséquente de montage à celle de la figure 5 dans laquelle le bras de la pièce d'assemblage pivote dans l'orifice du premier élément ;
- la figure 7 est une vue en coupe représentant la pièce d'assemblage montée sur le premier élément en position de prémontage;
- la figure 8 est une vue en coupe représentant la pièce d'assemblage montée sur le premier élément dans une position intermédiaire de relâchement entre la position de prémontage et la position d'assemblage ; et
- la figure 9 est une vue en coupe représentant la pièce d'assemblage montée sur le premier élément en position d'assemblage.

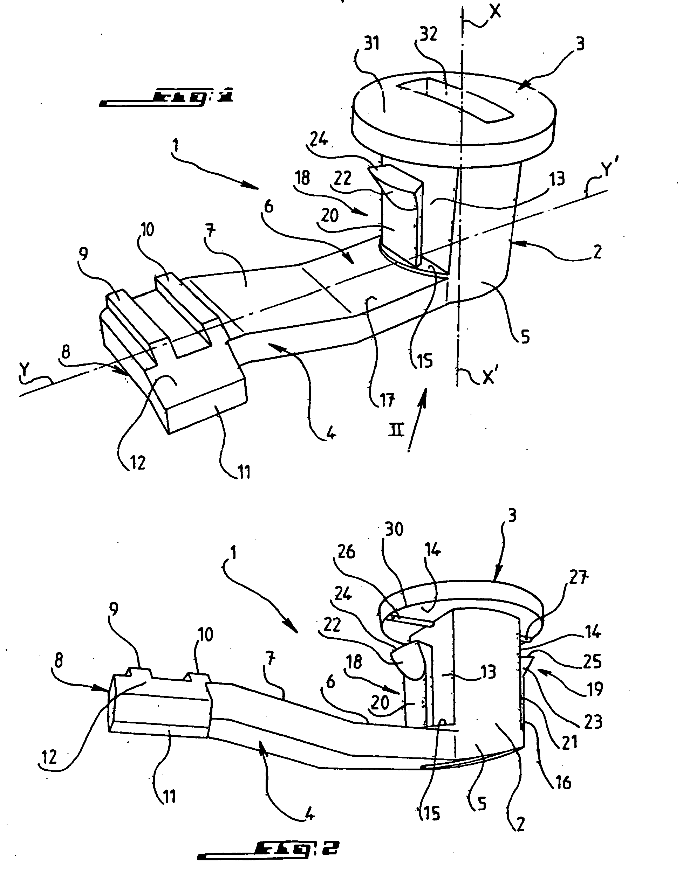

En référence aux figures 1 et 2, la pièce d'assemblage 1 de l'invention comporte un corps 2 qui s'étend selon un axe longitudinal XX', qui est surmonté d'une tête plate circulaire 3 et duquel s'étend solidairement un bras 4.

Le bras 4 présente une première partie 6 qui s'étend selon un axe longitudinal YY' perpendiculaire à l'axe longitudinal XX' du corps 5 depuis l'extrémité inférieure 5 de ce corps 2 jusqu'à une deuxième partie 7 qui s'étend dans le prolongement longitudinal de la première partie 6 en étant légèrement inclinée en direction de la tête 3, ces première 6 et deuxième 7 parties présentant une section transversal rectangulaire.

Le deuxième partie 7 se termine, du coté opposé à la première partie 6, par une extrémité d'assemblage 8 qui comporte deux nervures parallèles à section transversale rectangulaire 9,10 s'étendant perpendiculairement à l'axe longitudinal YY' du bras 4 et une partie 11 faisant saillie du bras 4 dans le prolongement des deux nervures 9,10 et dont la face supérieure 12 est inclinée dans la direction opposée à la tête 3.

Le corps 2 est de forme générale cylindrique en présentant deux faces planes 13,14 diamétralement opposées en étant alignées avec l'axe longitudinal YY' du bras 4 et qui s'étendent chacune selon l'axe longitudinal XX' du corps 2 depuis la face intérieure 14 de la tête plate 3 jusqu'à une face plane partiellement arquée 15,16 approximativement située au même niveau que la face supérieure 17 de la première partie 6 du bras 4 et de laquelle s'étend perpendiculairement une patte respective d'encliquetage 18,19.

Chaque patte d'encliquetage 18,19 longe la face plane correspondante 13,14 à une certaine distance de cette dernière et présente une première partie 20,21 à section transversale rectangulaire et une deuxième partie 22,23 radialement évasé vers l'extérieur comportant une surface d'appui supérieure plane 24,25 en regard de la face inférieure 14 de la tête 3 de la pièce d'assemblage 1.

Par ailleurs, la face inférieure 14 de la tête plate circulaire 3 présente deux bourrelets 26,27 diamétralement opposés et s'étendant chacun radialement depuis le corps 2 jusqu'à la périphérie 30 de la tête 3 en étant disposés en regard longitudinal des surfaces d'appui planes 24,25 des pattes d'encliquetage 18,19 de sorte que le premier élément puisse venir en prise entre la tête 3 et la patte d'encliquetage 18,19 comme il sera expliqué plus loin.

Enfin, la face supérieure 31 de la tête 3 présente une rainure 32 dans laquelle peut être partiellement insérée une pièce circulaire, par exemple une pièce de monnaie, afin de pouvoir tourner la pièce d'assemblage autour de l'axe XX' lorsqu'elle est montée sur l'écran de type cache style.

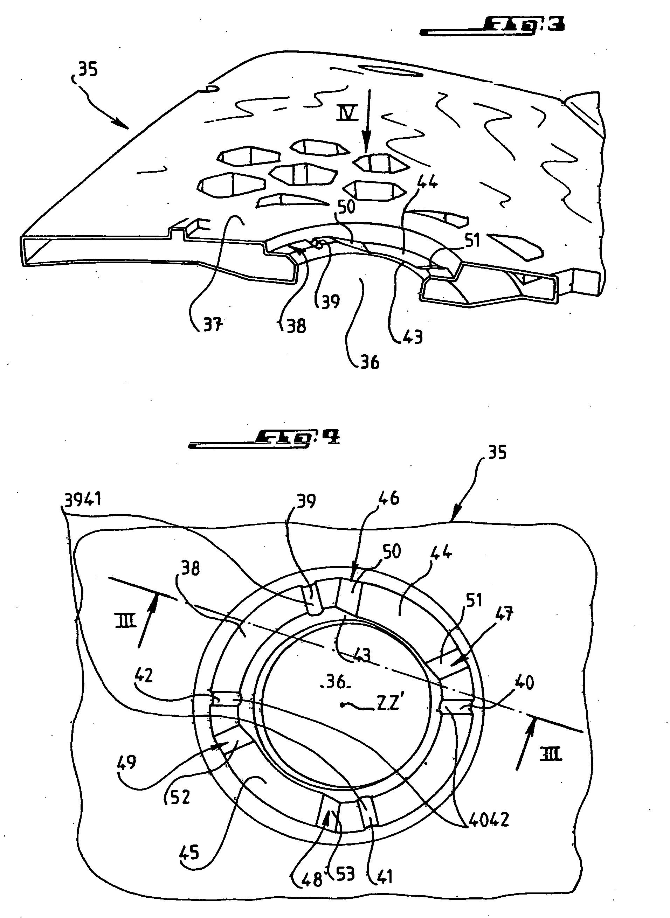

En référence aux figures 3 et 4, l'écran de type cache style 35 est sensiblement plan et comporte un orifice traversant circulaire 36 de diamètre sensiblement égal au diamètre du corps 2 de la pièce d'assemblage.

De plus, la face supérieure 37 de l'écran 35 comporte une bordure annulaire 38 tout autour de l'orifice 36 qui comporte quatre rainures d'indexage 39,40,41,42 organisées par paires, soit une paire pour le prémontage 3941 et une paire de rainures pour l'assemblage 4042, pour chacune desquelles les deux rainures correspondantes 39,41 ; 40,42 sont diamétralement opposées.

Les quatre rainures 39,40,41,42 sont espacées de 90° entre elles par rapport à l'axe ZZ' de l'orifice circulaire 36 et s'étendent radialement sur la bordure annulaire 38 sur toute la largeur de cette bordure 38 depuis sa périphérie interne 43.

Par ailleurs, la bordure 38 comporte également deux zones creuses arquées 44,45 diamétralement opposées qui s'étendent autour de l'orifice 36 entre deux rainures 39,40,41,42 contiguës et qui comportent chacune à leur deux extrémités respectives 46,47,48,49 une rampe 50,51 ; 52,53 se terminant à proximité de la rainure correspondante 39,40,41,42.

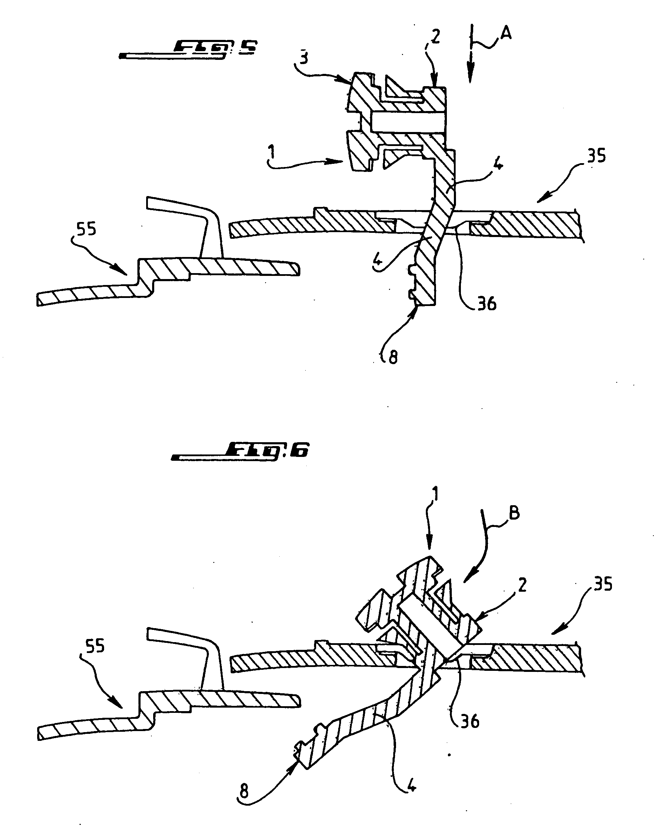

Le positionnement de la pièce d'assemblage 1 sur l'écran 35 et son fonctionnement sont décrits ci-après en référence aux figures 5 à 9.

On cherche à assembler un écran de type cache style 35 sur un projecteur 55 solidaire du moteur non représenté.

Comme illustré sur les figures 5 et 6, la pièce d'assemblage 1 est introduite dans l'orifice 36 de l'écran 35 par mouvement de translation vers le bas selon la flèche A de son bras 4 au travers cet orifice 36.

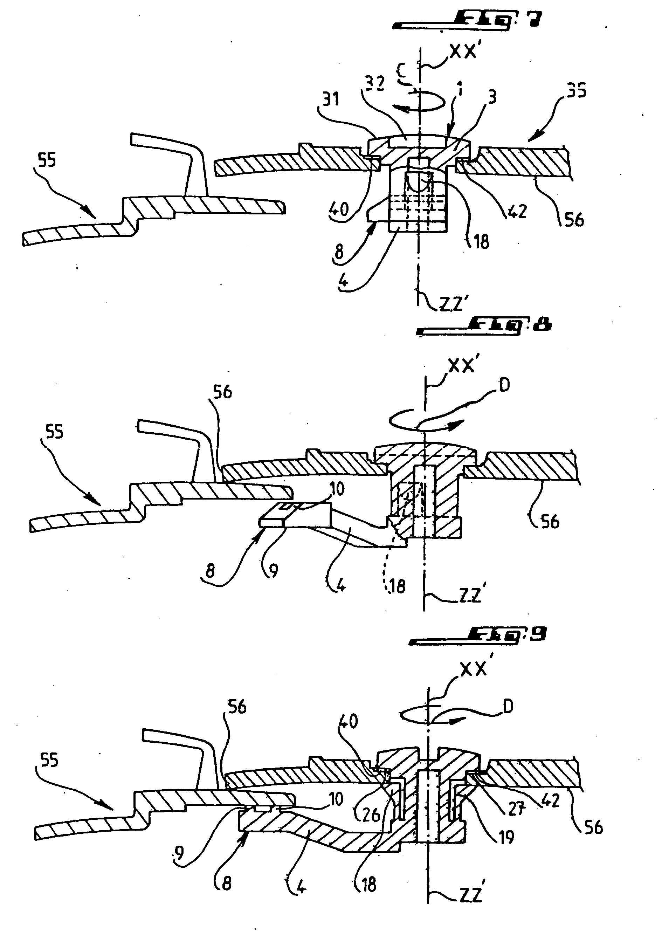

Puis, la pièce d'assemblage 1 est basculée selon la flèche B de la figure 6 et est placée en position de prémontage P représentée sur la figure 7 par passage par une position intermédiaire de relâchement telle que celle représentée sur la figure 8 pour laquelle les pattes d'encliquetage 18,19 ont traversées l'orifice 36 de l'écran 35, les deux bourrelets 26,27 de la tête de la pièce d'assemblage 3 sont positionnés dans chacune des deux zones creuses 44,45 de l'écran 35 ce dont il résulte le relâchement concomitant des pattes d'encliquetage 18,19 sous cet écran 35.

Puis, un mouvement de rotation de la pièce d'assemblage 1 selon la flèche C de la figure 7 et autour de l'axe ZZ' de l'orifice circulaire 36 qui est superposé à l'axe longitudinal XX' du corps de la pièce d'assemblage 1 est effectué, de sorte que les deux bourrelets 26,27 soient guidés en rotation vers la paire de rainures de prémontage 3941 par les rampes 50,51 ; 52,53 de ces deux zones creuses 44,45 jusqu'à indexation de ces bourrelets 26,27 dans la paire de rainures de prémontage 3942 non représentée sur cette figure, plaquage concomitant des pattes d'encliquetage 18,19 contre la face inférieure 56 de l'écran 35 qui subissent une légère tension, ce dont il résulte le maintien fixe de la pièce d'assemblage 1 sur l'écran 35.

Ainsi, dans cette position de prémontage, la pièce d'assemblage 1 peut être transportée fixée à l'écran sans risque de perte de cette pièce d'assemblage 1.

Pour assembler l'écran 35 sur le projecteur 55, la pièce d'assemblage 1 passe de la position de prémontage de la figure 7 à la position d'assemblage de la figure 9 par rotation d'un quart de tour de cette pièce d'assemblage autour des axes ZZ' et XX' selon la flèche D des figure 8 et 9, cette rotation pouvant être effectuée à l'aide d'une pièce de monnaie introduite dans la rainure 32 faite sur la face supérieure 31 de la tête 3 de la pièce d'assemblage 1.

Lors de la mise en place du quart de tour 3 dans le logement 36 du cache, les godrons 26,27 de trouvent en vis-à-vis avec les zones creuses 44,45. De cette façon lors du clippage, les clips 18,19 ont suffisamment d'espace pour se détendre correctement sous la surface du cache 56. La rotation dans le sens trigonométrique du quart de tour 3 de quelques degrés vient mettre en contact le godrons 26,27 avec les surfaces inclinées des zones creuses 50,53. En continuant la rotation les clips 18,19 viennent s'appuyer sous la surface du cache 56 et mettre sous contrainte le quart de tour 3. Enfin les godrons 26,27 s'engagent dans les rainures 39,41 qui marquent la position de prémontage du quart de tour 3. Une nouvelle rotation de 45° engage les godrons 26,27 dans les rainures 42,40 qui marquent la position d'assemblage final sur véhicule.

Au cours de ce mouvement de rotation représenté sur les figures 8 et 9, le bras 4 de la pièce d'assemblage 1, est également en rotation, et les nervures 9,10 de l'extrémité d'assemblage 8 de ce bras 4 viennent plaquer, sur une zone déportée de l'axe de rotation ZZ', le projecteur 55 solidaire du moteur contre le bord 56 de l'écran 35.

Le contact entre les deux nervures 9,10 de l'extrémité 8 du bras 4 et le projecteur 55 est quasi ponctuel, permettant ainsi d'optimiser la force de poussée de ce bras 4 sur le projecteur 55 contre l'écran 35.

La configuration particulière de la pièce d'assemblage 1 permet au système de pouvoir être maintenu de façon stable dans la position de prémontage, pendant tout le transport jusqu'à l'assemblage final.

Les zones creuses 44,45 sont indispensables au bon accrochage du quart de tour 3, afin d'obtenir un clippage correcte lors de l'assemblage. Sans cette zone creuse, les clips 18,19 ne peuvent pas se détendre sous la surface du cache 56.

Enfin, on comprend également que la pièce d'assemblage décrite précédemment peut être utilisé pour assembler deux pièces de toute nature et dans tout domaine que ce soit.

## Revendications

1. Pièce d'assemblage d'un premier élément à un deuxième élément, comprenant des moyens d'appui de contact rotatif (3,14) sur le premier élément (35) et des moyens d'assemblage (4,9,10) du premier élément (35) au deuxième élément (55) qui sont activables par rotation de cette pièce d'assemblage (1) montée sur le premier élément (35) et passage d'au moins une position de prémontage à une position d'assemblage, **caractérisée en ce qu'**elle comporte des premiers moyens de verrouillage (18,19,26,27,3941) sur le premier élément (35) dans la position de prémontage et des seconds moyens de verrouillage (18,19,26,27,4042) sur le premier élément (35) dans la position d'assemblage.

2. Pièce d'assemblage selon la revendication 1, **caractérisée en ce qu'**elle comprend un corps (2) surmonté d'une tête (3) en appui de contact rotatif sur la face supérieure (37) du premier élément (35) lorsque le dit corps (2) est logé au travers d'un orifice (36) de ce premier élément (35), et **en ce qu'**elle comprend un bras (4) qui s'étend solidairement depuis le corps (2) de la pièce d'assemblage (1) et qui comporte des moyens de maintien fixe (9,10) du deuxième élément (55) contre le premier élément (35) dans la position d'assemblage.

3. Pièce d'assemblage selon la revendication 2, **caractérisée en ce que** le bras (4) s'étend depuis une portion inférieure (5) du corps (2), de sorte que lorsque le dit corps (2) est logé au travers de l'orifice (36) du premier élément (35), le bras (4) s'étend sous la face inférieure (56) du premier élément (35), et **en ce que** l'extrémité libre (11) du bras (4) comporte au moins une nervure (9,10), de préférence deux nervures parallèles (9,10), assurant le plaquage du deuxième élément (55) contre le premier élément (35) dans la position d'assemblage.

4. Pièce d'assemblage selon la revendication 3, **caractérisée en ce que** la face inférieure (14) de la tête d'appui circulaire (3) comporte au moins un bourrelet (26,27) qui est apte à venir s'indexer dans au moins deux rainures conjuguées (39, 41 ;40,42) réalisées sur la face supérieure (37) de la première pièce (35) pour, respectivement, adopter la position de prémontage et la position d'assemblage, et **en ce que** le corps (2) comporte au moins une patte d'encliquetage déformable (18,19) en regard axial du bourrelet (26,27) de la tête circulaire (3) de sorte que dans les positions de prémontage et d'assemblage, la patte d'encliquetage (18,19) vienne s'encliqueter sous la première pièce (35), ce dont il résulte que cette première pièce (35) vient en prise entre la patte d'encliquetage (18,19) et la tête circulaire (3) de la pièce d'assemblage (1).

5. Pièce d'assemblage selon la revendication 4, **caractérisée en ce que** la face inférieure (14) de la tête d'appui circulaire (3) comporte deux bourrelets (26,27) s'étendant radialement autour du corps (2) en étant diamétralement opposés, et **en ce que** la face supérieure (37) du premier élément (35) comporte un paire de rainure pour le prémontage (3941) et une paire de rainure pour l'assemblage (4042), ces quatre rainures (39,40,41,42) étant deux à deux diamétralement opposées et espacées chacune d'un angle de 90° de sorte que le passage de la position de prémontage à la position d'assemblage s'effectue par rotation d'un quart de tour de la tête d'appui (3) de la pièce d'assemblage (1) en plan sur le premier élément par rapport au premier plan sensiblement perpendiculaire.

6. Pièce d'assemblage selon l'une quelconque des revendications 2 à 5, **caractérisée en ce que** la face supérieure (31) de la tête d'appui (3) comporte une rainure centrale (32) permettant de loger un objet de forme conjugué, par exemple une pièce de monnaie, pour exercer manuellement la force de rotation nécessaire pour passer de la position de prémontage à la position d'assemblage.

7. Dispositif d'assemblage d'un premier élément à un deuxième élément comprenant la pièce d'assemblage selon l'une quelconque des revendications 1 à 6 et **caractérisé en ce qu'**il comporte des moyens facilitant l'assemblage (44,45 ; 50,51,52,53) du premier élément (35) au deuxième élément (55) par relâchement des efforts exercés par la pièce d'assemblage sur le premier élément pendant une position intermédiaire de relâchement et augmentation des efforts de fixation de la pièce d'assemblage (1) sur le premier élément (35) au passage de la position intermédiaire de relâchement à la position de prémontage ou d'assemblement.

8. Dispositif selon la revendication 7 comprenant le dispositif d'assemblage selon l'une quelconque des revendications 5 à 7, **caractérisé en ce qu'**il comporte au moins une zone creuse (44,45) réalisée sur la face supérieure (37) du premier élément (35) en s'étendant autour de l'orifice (36) formé dans cet élément (35) et entre deux rainures adjacentes (39,40 ; 41,42), et **en ce que** cette zone creuse (44,45) comporte deux rampes (50,51 ; 52,53) qui remontent chacune jusqu'à proximité de la rainure adjacente (39,40,41,42), de sorte que le passage de la pièce d'assemblage (1) d'une position intermédiaire de relâchement dans laquelle le bourrelet de la tête d'appui (26,27) est dans la zone creuse (44,45) jusqu'à l'une ou l'autre des positions indexées de prémontage et d'assemblage, conduise à un déplacement axial vers le haut de la pièce d'assemblage (1) relativement au premier élément (35), et ainsi l'exercice d'une force de serrage du deuxième élément (55) sur le premier élément (35) lorsque la pièce d'assemblage () atteint la position d'assemblage.

9. Application de la pièce d'assemblage de l'invention selon les revendications 1 à 6 et du dispositif d'assemblage selon les revendications 7 et 8, à l'assemblage d'un écran de type cache style à un moteur de véhicule automobile.

## Claims

1. A piece for assembling a first element to a second element, comprising rotary contact bearing means (3, 14) on the first element (35) and means (4, 9, 10) for assembling the first element (35) to the second element (55) which can be activated by rotation of this assembly piece (1) mounted on the first element (35) and passage from at least one pre-assembly position to an assembly position, **characterized in that** it includes first locking means (18, 19, 26, 27, 3941) of the first element (35) in the pre-assembly position and second locking means (18, 19, 26, 27, 4042) on the first element (35) in the assembly position.

2. The assembly piece according to claim 1, **characterized in that** it comprises a body (2) topped by a head (3) in rotary contact bearing on the upper face (37) of the first element (35) when said body (2) is housed through an orifice (36) of this first element (35), and **in that** it comprises an arm (4) which extends integrally from the body (2) of the assembly piece (1) and which includes means (9, 10) for keeping the second element (55) fixed against the first element (35) in the assembly position.

3. The assembly piece according to claim 2, **characterized in that** the arm (4) extends from a lower portion (5) of the body (2), such that when said body (2) is housed through the orifice (36) of the first element (35), the arm (4) extends under the lower face (56) of the first element (35), and **in that** the free end (11) of the arm (4) includes at least one rib (9, 10), preferably two parallel ribs (9, 10), ensuring that the second element (55) is pressed against the first element (35) in the assembly position.

4. The assembly piece according to claim 3, **characterized in that** the lower face (14) of the circular bearing head (3) includes at least one flange (26, 27) which is capable of indexing itself in at least two matching grooves (39, 41; 40, 42) realized on the upper face (37) of the first piece (35) in order to adopt the pre-assembly position and the assembly position, respectively, and **in that** the body (2) includes at least one deformable snap-on tab (18, 19) axially opposite the flange (26, 27) of the circular head (3) such that in the pre-assembly and assembly positions, the snap-on tab (18, 19) snaps under the first piece (35), from which it results that this first piece (35) engages between the snap-on tab (18, 19) and the circular head (3) of the assembly piece (1).

5. The assembly piece according to claim 4, **characterized in that** the lower face (14) of the circular bearing head (3) includes two flanges (26, 27) extending radially around the body (2) while being diametrically opposed, and **in that** the upper face (37) of the first element (35) includes a pair of grooves for the pre-assembly (3941) and a pair of grooves for the assembly (4042), these four grooves (39, 40, 41, 42) being in pairs diametrically opposite and spaced from each other by a 90□ angle such that the passage from the pre-assembly position to the assembly position is done by rotating the bearing head (3) of the assembly piece (1) one-quarter turn in a plane manner on the first element in relation to the first essentially perpendicular plane.

6. The assembly piece according to any one of claims 2 to 5, **characterized in that** the upper face (31) of the bearing head (3) includes a central groove (32) making it possible to house an object matching in shape, for example a coin, in order to manually exert the rotational force necessary in order to go from the pre-assembly position to the assembly position.

7. A device for assembling a first element to a second element comprising the assembly piece according to any one of claims 1 to 6 and **characterized in that** it includes means facilitating the assembly (44, 45; 50, 51, 52, 53) of the first element (35) to the second element (55) by releasing stresses exerted by the assembly piece on the first element during an intermediate release position and increasing stresses for fixing the assembly piece (1) on the first element (35) when going from the intermediate release position to the pre-assembly or assembly position.

8. The device according to claim 7, comprising the assembly device according to any one of claims 5 to 7, **characterized in that** it includes at least one hollow zone (44, 45) realized on the upper face (37) of the first element (35) while extending around the orifice (36) formed **in that** element (35) and between two adjacent grooves (39, 40; 41, 42), and **in that** this hollow zone (44, 45) includes two ramps (50, 51; 52, 53) which each go up toward the vicinity of the adjacent groove (39, 40, 41, 42), such that the passage of the assembly piece (1) from an intermediate release position in which the flange of the bearing head (26, 27) is in the hollow zone (44, 45) to either of the indexed pre-assembly and assembly positions, leads to an upward axial displacement of the assembly piece (1) relative to the first element (35), and thereby the exertion of a gripping force of the second element (55) on the first element (35) when the assembly piece (1) reaches the assembly position.

9. An application of the assembly piece of the invention according to claims 1 to 6 and of the assembly device according to claims 7 and 8, for the assembly of an engine cover-type screen to a motor vehicle engine.

## Patentansprüche

1. Teil zum Zusammenbauen eines ersten Elements mit einem zweiten Element, umfassend Drehkontaktstützmittel (3, 14) auf dem ersten Element (35) und Mittel (4, 9, 10) zum Zusammenbauen des ersten Elements (35) mit dem zweiten Element (55), die durch Drehung dieses Zusammenbauteils (1), das an dem ersten Element (35) angebracht ist, und durch Übergang von mindestens einer Vormontageposition auf eine Zusammenbauposition, aktivierbar sind, **dadurch gekennzeichnet, dass** es erste Verriegelungsmittel (18, 19, 26, 27, 3941) auf dem ersten Element (35) in der Vormontageposition und zweite Verriegelungsmittel (18, 19, 26, 27, 4042) auf dem ersten Element (35) in der Zusammenbauposition umfasst.

2. Zusammenbauteil nach Anspruch 1, **dadurch gekennzeichnet, dass** es einen Körper (2) umfasst, den ein Kopf (3) überragt, der sich mit Drehkontakt auf der oberen Seite (37) des ersten Elements (35) abstützt, wenn der Körper (2) durch eine Öffnung (36) dieses ersten Elements (35) hindurch aufgenommen wird, und dass es einen Arm (4) umfasst, der sich fest verbunden von dem Körper (2) des Zusammenbauteils (1) aus erstreckt und der Mittel (9, 10) zum Festhalten des zweiten Elements (55) an dem ersten Element (35) in der Zusammenbauposition umfasst.

3. Zusammenbauteil nach Anspruch 2, **dadurch gekennzeichnet, dass** der Arm (4) sich von einem unteren Abschnitt (5) des Körpers (2) aus erstreckt, so dass wenn der Körper (2) durch die Öffnung (36) des ersten Elements (35) hindurch aufgenommen wird, der Arm (4) sich unter der unteren Seite (56) des ersten Elements (35) erstreckt, und dass das freie Ende (11) des Arms (4) mindestens eine Rippe (9, 10), bevorzugt zwei parallele Rippen (9, 10) umfasst, die das Andrücken des zweiten Elements (55) an das erste Element (35) in der Zusammenbauposition sicherstellt bzw. sicherstellen.

4. Zusammenbauteil nach Anspruch 3, **dadurch gekennzeichnet, dass** die untere Seite (14) des kreisförmigen Stützkopfes (3) mindestens eine Wulst (26, 27) umfasst, die dazu geeignet ist, sich in mindestens zwei zugeordneten Rillen (39, 41; 41,42), die auf der oberen Seite (37) des ersten Teils (35) ausgebildet sind, zu positionieren, um jeweils die Vormontageposition und die Zusammenbauposition einzunehmen, und dass der Körper (2) mindestens eine verformbare Einrastlasche (18, 19) axial gegenüber der Wulst (26, 27) des kreisförmigen Kopfes (3) umfasst, so dass die Einrastlasche (18, 19) in den Vormontage- und Zusammenbaupositionen unter dem ersten Teil (35) einrastet, woraus sich ergibt, dass dieses erste Teil (35) zwischen der Einrastlasche (18, 19) und dem kreisförmigen Kopf (3) des Zusammenbauteils (1) eingreift.

5. Zusammenbauteil nach Anspruch 4, **dadurch gekennzeichnet, dass** die untere Seite (14) des kreisförmigen Stützkopfes (3) zwei Wülste (26, 27) umfasst, die sich radial um den Körper (2) herum erstrecken, wobei sie sich diametral gegenüberstehen, und dass die obere Seite (37) des ersten Elements (35) ein Rillenpaar für die Vormontage (3941) und ein Rillenpaar für den Zusammenbau (4042) umfasst, wobei diese vier Rillen (39, 40, 41, 42) sich paarweise diametral gegenüberstehen und jeweils um einen Winkel von 90° beabstandet sind, so dass der Übergang von der Vormontageposition auf die Zusammenbauposition durch eine Viertelumdrehung des Stützkopfes (3) des Zusammenbauteils (1) flach auf dem ersten Element im Verhältnis zu der ersten Ebene im Wesentlichen rechtwinklig erfolgt.

6. Zusammenbauteil nach einem der Ansprüche 2 bis 5, **dadurch gekennzeichnet, dass** die obere Seite (31) des Stützkopfes (3) eine mittlere Rille (32) umfasst, die es ermöglicht, einen passend geformten Gegenstand aufzunehmen, z.B. ein Geldstück, um manuell die Drehkraft auszuüben, die notwendig ist, um von der Vormontageposition auf die Zusammenbauposition überzugehen.

7. Vorrichtung zum Zusammenbauen eines ersten Elements mit einem zweiten Element, die das Zusammenbauteil nach einem der Ansprüche 1 bis 6 umfasst und **dadurch gekennzeichnet ist, dass** sie Mittel umfasst, die den Zusammenbau (44, 45; 50, 51, 52, 53) des ersten Elements (35) mit dem zweiten Element (55) durch Entspannung der Kräfte, die von dem Zusammenbauteil auf das erste Element während einer Entspannungszwischenposition ausgeübt werden, und durch Erhöhung der Kräfte zum Befestigen des Zusammenbauteils (1) an dem ersten Element (35) beim Übergang von der Entspannungszwischenposition auf die Vormontage- oder Zusammenbauposition erleichtern.

8. Vorrichtung nach Anspruch 7, umfassend die Zusammenbauvorrichtung nach einem der Ansprüche 5 bis 7, **dadurch gekennzeichnet, dass** sie mindestens einen Hohlbereich (44, 45) umfasst, der auf der oberen Seite (37) des ersten Elements (35) ausgebildet ist, wobei er sich um die Öffnung (36) herum, die in diesem Element (35) gebildet ist, und zwischen zwei nebeneinanderliegenden Rillen (39, 40; 41, 42) erstreckt, und dass dieser Hohlbereich (44, 45) zwei Rampen (50, 51; 52, 53) umfasst, die jeweils bis in die Nähe der angrenzenden Rille (39, 40, 41, 42) ansteigen, so dass der Übergang des Zusammenbauteils (1) von einer Entspannungszwischenposition, in der die Wulst des Stützkopfes (26, 27) sich in dem Hohlbereich (44, 45) befindet, auf die eine oder andere der indexierten Vormontage- und Zusammenbaupositionen zu einer Axialverlagerung des Zusammenbauteils (1) mit Bezug auf das erste Element (35) nach oben und somit zur Ausübung einer Klemmkraft des zweiten Elements (55) auf das erste Element (35), wenn das Zusammenbauteil (1) die Zusammenbauposition erreicht, führt.

9. Anwendung des erfindungsgemäßen Zusammenbauteils nach Anspruch 1 bis 6 und der Zusammenbauvorrichtung nach Anspruch 7 und 8 auf den Zusammenbau einer Abdeckung nach Art einer Stilblende an einem Kraftfahrzeugmotor.
